(19) Europäisches Patentamt
European Patent Office
Office européen des brevets

(11) Publication number: **0 508 203 A1**

(12) # EUROPEAN PATENT APPLICATION

(21) Application number: **92104993.8**

(22) Date of filing: **23.03.92**

(51) Int. Cl.[5]: **C08G 59/10**, C08G 73/02, D21H 17/55, D21H 17/56

(30) Priority: **25.03.91 US 673895**
**21.02.92 US 839865**

(43) Date of publication of application:
**14.10.92 Bulletin 92/42**

(84) Designated Contracting States:
**AT BE CH DE ES FR GB IT LI NL PT SE**

(71) Applicant: **HERCULES INCORPORATED**
**Hercules Plaza**
**Wilmington Delaware 19894-0001(US)**

(72) Inventor: **Ehrhardt, Susan M., Dr.**
**213 Euclid Avenue**
**Haddonfield, New Jersey 08033(US)**
Inventor: **Gast, John C., Dr.**
**531 Hemingway Drive**
**Hockessin, Delaware 19707(US)**
Inventor: **Lewandowski, Joseph L., Jr.**
**7 McCann Road**
**Newark, Delaware 19711(US)**

(74) Representative: **Lederer, Franz, Dr. et al**
**Lederer, Keller & Riederer, Patentanwälte,**
**Lucile-Grahn-Strasse 22**
**W-8000 München 80(DE)**

(54) **Epihalohydrin/polyamine polymers containing low levels of dihalopropanols, process for making the same, and paper sizes made therefrom.**

(57) Cationic resins useful as flocculants, retention aids, wet strengthening agents, size promoters, and dispersion stabilizers are provided. The resins are produced by reaction of an epihalohydrin and a polyalkylene polyamine in a polymerization reaction, in a manner that substantially reduces the level of dihalopropanols and other epihalohydrin by-products formed in-situ. The resins having a reduced level of epihalohydrin by-products are used in paper sizing dispersions as the dispersion stabilizer. Such sizing materials have significantly lower levels of dihalopropanols and other epihalohydrin by-products.

EP 0 508 203 A1

This invention relates to polymers of an epihalohydrin and a polyalkylene polyamine that contain low levels of dihalopropanols and other epihalohydrin byproducts. It also relates to paper size dispersions stabilized by said resins.

Cationic water-soluble resins, derived from the reaction of epihalohydrins, such as epichlorohydrin, and polyalkylene polyamines, such as ethylenediamine (EDA), bis-hexamethylenetriamine (BHMT) and hexamethylenediamine (HMDA) have long been known. They are described in patents such as U.S. Patent 3,655,506 to J. M. Baggett, et al. and others such as U.S. Patent 3,248,353 and U.S. Patent No. 2,595,935 to Daniel et al. from which their generic description as "Daniel's Resins" arises.

Typically such materials are made commercially using an excess of epihalohydrin, such as epichlorohydrin, to fully alkylate the polyamine. Crosslinking is then initiated by adding additional polyamine at an elevated temperature to promote crosslinking. The excess of epichlorohydrin is related to the presence of epichlorohydrin by-products in the process. In the typical process a significant portion of the epichlorohydrin is converted to monomeric by-products such as the dichloropropanols (DCP) (often >3.0% in commercial products) and other epichlorohydrin by-products. These are chlorinated hydrocarbon species some of which are suspected of having cancer causing potential. Increasing environmental concerns have created a demand for products that are free from such environmentally unsound byproducts as 1,3-dichloro-2-propanol and 1-chloro-2,3-propanediol, as well as unreacted epichlorohydrin.

Physical methods of decontaminating aqueous mixtures of reaction products also containing 1,3-dichloro-2-propanol and 1-chloro-2,3-propanediol, such as solvent extraction with a water-miscible solvent or adsorption on a solid adsorbent, such as charcoal, are known. However, such known processes can result in simultaneous loss of reaction product, costly measures to recover and purify the solvent and adsorbent, and still leave the problem of how to ultimately dispose of the contaminant.

Removal of 1,3-dichloro-2-propanol and 1-chloro-2,3-propanediol by chemical means from aqueous mixtures, such as by treatment with alkali to give glycerol, are also known. However, such treatment can adversely affect those reaction products sensitive to alkali treatment.

It is thus desirable to eliminate, to the extent possible, the conversion of epichlorohydrin to monomeric by-products.

Cationic water-soluble resins of this type are useful as flocculants and retention aids. Flocculation of anionic colloidal materials such as pulp fibers, and the common mineral fillers such as clay and calcium carbonate, is accomplished by charge neutralization. Such action is often termed patch flocculation and is described in, for instance, U.S. Patents 2,969,302 and 3,577,313. In this application the materials find use in water treatment, and in paper making, when the material is added to the pulp slurry prior to sheet formation.

Such resins also are useful as scavengers of polymeric colloids and as such serve an additional purpose in the enhancement of the paper making retention process or in water treatment. In this application such materials act to enhance the effectiveness of added high molecular weight flocculants, such as high molecular weight polyacrylamides, which act through a bridging flocculation mechanism. The use of two such materials to produce an enhancement of retention is often referred to as a dual polymer or dual component retention system.

In the preparation of some of these materials the epihalohydrin undergoes a cyclization reaction with the backbone nitrogen to form a 4-membered ring referred to as an azetidinium ion, as depicted by the formula

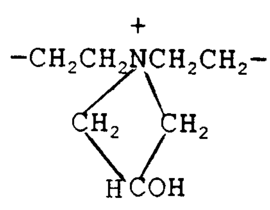

Such groups are reactive with pulp carboxyls, as well as with residual secondary and primary amine nitrogens that may be within the resin, and possibly through other less well understood crosslinking mechanisms. Such reactions are accelerated by heating and such thermosetting resins find application as paper wet strengthening agents as described in U.S. patent 2,595,935, for example.

When used in combination with reactive paper sizing agents such materials are known to assist in the development of sizing of the paper; both in the rate of sizing development and in the absolute level of sizing. A portion of this improvement can often be attributed to the beneficial effect of the resin in aiding the retention of the paper sizing agent in the formed paper sheet when both are present in the pulp slurry. A

further enhancement in sizing can also often be noted with these resins; such enhancement being referred to as size promotion. This effect is particularly noticeable with certain pulp slurries, such as those rich in high-yield pulps or those without adequate soluble alkalinity, that commonly do not produce much sizing from the reactive size just off the paper machine. In this case, the material can be employed separately or as a component of the size dispersion stabilizing system, to enhance sizing. Such materials have been described by the work of Lindstrom (Nordic Pulp and Paper Research Journal 2:39-45(1986) and in U.S. patent 4,522,686.

In combination with non-reactive sizing materials such as rosin, fortified rosin, terpene resins, hydrocarbon resins, and the like, such materials can enhance the performance of the hydrophobic moiety under certain conditions. In particular, performance is extended to a higher pH range and requires the use of less alum or hydrolyzable aluminum salts to affect sizing. Such an application can involve incorporation of the resin into the sizing agent formulation as described in U.S. patent 3,966,654 and the like.

Such materials can be used as the sole or primary stabilizing component to form an aqueous dispersion of a hydrophobic material. A common application for such materials is in the dispersion of paper sizing agents; both the reactive and non-reactive types. Well known are dispersions of fortified rosin as described in U.S. patent 3,966,654 and of alkylketene dimer as described in U.S. patent 3,483,077 which uses similar cationic resins of the polyamide type, both of which are incorporated herein in their entireties by reference. Dispersions of many other hydrophobic materials with resins of this type are known. Besides the advantages of size performance enhancement, size promotion, and size retention mentioned previously, such resins act to improve the stability of the aqueous dispersion. They act through a combination of electrostatic and stearic or polymeric stabilization to enhance stability to shear and pumping, to improve salt tolerance, and to resist coagulation and flocculation, all of which improve the handling properties of such dispersions.

Important to the use of such materials in any of the mentioned applications and others is the elimination of undesirable by-products of the reaction process that may have a deleterious effect on the environment and the health of those who come in close proximity with the product.

In accordance with one aspect of the present invention, a process is provided that significantly decreases the generation of epihalohydrin derived monomeric by-products. The results are dramatic and the magnitude of the decrease is unexpected from past experience. Reductions of DCP content from greater than 30,000 ppm DCP to less than 3000 ppm have been achieved for a resin based on BHMT. Further reductions are possible. Other resins, based on HMDA, have been made with less than 1000 ppm DCP using the techniques of this invention. In all cases, the resins retain their effectiveness in the intended end-use application.

The method of the present invention comprises the addition of the polyalkylene polyamine to the epihalohydrin at low temperature. More particularly, the temperature should not exceed about 60 ° C. for any significant period of time during the addition of the polyalkylene polyamine to the epihalohydrin. The temperature should not exceed about 60 ° C. during addition of the first 90 percent of the polyalkylene polyamine. Preferably, the temperature should be in the range of about 25 ° C. to about 45 ° C. Maintaining the temperature below approximately 45 ° C. throughout the addition period allows nearly complete alkylation without significant conversion to epi by-products.

According to the present invention, the resins are made by using no more epihalohydrin than that required to fully alkylate all the amine sites of the polyalkylene polyamine to a tertiary amine. More particularly, the epihalohydrin and the polyalkylene polyamine are combined in a ratio so that between 50 and 100% of the available amine nitrogen sites are alkylated to tertiary amines. Excess epihalohydrin, beyond that to fully alkylate all the amine sites to the tertiary amine, should not be used. It is preferred that between about 50% and 80% of the available amine nitrogen sites are alkylated to tertiary amines.

In one embodiment of the present invention, the resins are made by adding the polyalkylene polyamine to the epihalohydrin within a specified time period, while maintaining the temperature range and component ratios of the previous requirements of the invention. Preferably, the time of addition of the polyalkylene polyamine should not exceed about 150 minutes for addition of at least about the first 90% by weight of the amine. More preferably the addition of at least about 90% of the amine should be within about 120 minutes and most preferably within about 100 minutes. Within the above ranges the addition time should be long enough to allow completion of the alkylation reaction occuring between the amine and the epihalohydrin.

This aspect of the invention requires efficient processing equipment so that the resulting exothermic heat-of-reaction, produced when a polyalkylene polyamine and epihalohydrin are combined, is effectively removed thereby allowing control of the reaction temperature within the limits required for the invention. The requirement, of a maximum addition time, avoids prolonged periods in which the unreacted epihalohydrin is exposed to an alkaline environment; conditions conducive to conversion of the epihalohydrin to undesirable

side products.

Also according to the present invention, the polyalkylene polyamine is added to all or nearly all of the epihalohydrin. This aspect of the invention has the advantage that during the majority of the alkylation reaction, there is no excess of unreacted polyamine, and thus the pH of the combination during addition of the amine is not high and not conducive to conversion of the epihalohydrin to side products. This aspect further has the advantage of avoiding the highly reactive combination of 1 mole of epihalohydrin with 1 mole of polyamine which occurs when epihalohydrin is added to the amine.

Combining addition of the polyalkylene polyamine to the epihalohydrin, over a short period of time, at a low temperature and at a lower ratio of epihalohydrin to polyalkylene polyamine yields a product having significantly reduced amount of epihaloydrin derived by-products. At any given epihalohydrin level, low temperature and short time addition of the polyamine provides a further reduction beyond that expected from the reduction of epihalohydrin charge alone.

The cationic water-soluble resins of this invention are prepared by the reaction of an epihalohydrin and a polyalkylene polyamine in a polymerization reaction, in a manner that substantially reduces the level of dihalopropanols and other epihalohydrin byproducts. The epihalohydrin has the formula:

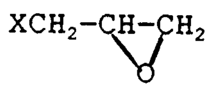

where
X = Cl or Br
The polyalkylene polyamine is selected from the group consisting of polyalkylene polyamines of the formula:

$(NH_2\text{-}CHZ\text{-}(CH_2)_n\text{-}NHR\text{-})_x$

where:
n = 1-7,
x = 1-6,
R = H or $CH_2Y$,
Z = H or $CH_3$,
and
Y = $CH_2Z$, H, $NH_2$, or $CH_3$,
polyalkylene polyamines of the formula:

$(NH_2\text{-}CH_2\text{-}(CHZ)_m\text{-}(CH2)_n\text{-}NHR\text{-})_x$

where:
m = 1-6, n = 1-6, and m + n = 2-7,
R = H or $CH_2Y$,
Z = H or $CH_3$,
and
Y = $CH_2Z$, H, $NH_2$, or $CH_3$,
and mixtures thereof.

The polyalkylene polyamine is added to an aqueous mixture of the epihalohydrin so that during its addition the temperature of the mixture does not exceed 60 ° C. Lower temperatures lead to further improvements, though too low a temperature may build dangerously latent reactivity into the system. The preferred temperatures fall within the range of about 25 ° C. to about 60 ° C. More preferred is a range of from about 30 ° C. to about 45 ° C.

Alkylation of the polyamine occurs rapidly proceeding to form secondary and tertiary amines depending on the relative amounts of epihalohydrin and polyamine. The levels of epihalohydrin and polyamine are such that between about 50 and 100% of the available amine nitrogen sites are alkylated to tertiary amines. Preferred levels are between about 50 and about 80% alkylation of the amine nitrogen sites. Excess epihalohydrin beyond that required to fully alkylate all the amine sites to the tertiary amine should not be used.

Preferfably time spent combining the polyamine and epichlorohydrin should be minimized. This is

required to minimize the period during the combining of reactants, in which there is a significant level of unalkylated or partially alkylated polyamine in the presence of uncombined epichlorohydrin. This condition results in an alkaline system in which conversion to epihalohydrin by-products is accelerated. Through experience, it has been found that the time for addition of at least about 90% by weight of the polyamine, while maintaining the reaction temperature within the specified range, should not exceed 150 minutes if 1,3 DCP levels are to be kept below the maximum levels desired. A more preferred addition time is 120 minutes or less for addition of at least about 90% of the amine, with 100 minutes or less time of addition being most preferred. Once about 90% of the polyamine is added then the time of addition of the remainder becomes less important. This condition is specifically related to the completion of the alkylation reaction between the polyamine and the epihalohydrin, at which point practically all of the epihalohydrin has been consumed in alkylating the polyamine.

Following complete addition of the polyamine and completion of alkylation, the temperature of the mixture is allowed to rise and/or the mixture is heated to effect crosslinking. The crosslinking rate is a function of concentration, temperature, agitation, and the addition conditions of the polyamine all of which can be readily determined by those skilled in the art. The crosslinking rate can be accelerated by the addition of small shots of the polyamine or other polyamines fitting the description of the invention or addition of various alkalies at or near the crosslinking temperature.

The resin is stabilized against further crosslinking to gelation by addition of acid, dilution by water, or a combination of both. Acidification to pH 5.0 or less is generally adequate.

In preparing the cationic water-soluble resins of this invention the epihalohydrin component might include epichlorohydrin or epibromohydrin.

The polyalkylene polyamines that would commonly be employed in preparing the resins of this invention might include such straight chain types as polyethylene polyamines, polypropylene polyamines, polybutylene polyamines, and the like. Diamines with terminal amino end-groups such as ethylenediamine, propanediamine, butanediamine, pentanediamine, hexanediamine (1,6-hexanediamine), and the like can be used. Polyamines containing secondary or tertiary internal amines, such as diethylenetriamine, triethylenetetramine, tetraethylenepentamine, dipropylenetriamine, methyl bis-(3-aminopropyl)amine, methyl bis-(2-aminoethyl)amine, and related compounds can be used. Polyamines containing longer hydrocarbon segments between the amine groups, such as bis-hexamethylenetriamine and other polyalkylene polyamines of a similar nature can be used. Polyalkylene polyamines containing some internal branching, such as 2-methyl-1,5-pentanediamine and 4,7-dimethyltriethylenetetramine can also be used. Mixtures of polyalkylene polyamines can be used, as can polyamines of the type described but with irregular repeating units.

The process of this invention specifically requires the addition of the amine to a vessel containing all or nearly all the epihalohydrin to be used. It is also required that some solvent be present with the epihalohydrin during the amine addition. Water is the preferred solvent, though other water miscible solvents can be used. Exemplary of such solvents are the lower alkyl alcohols such as methanol, ethanol, and isopropanol, and the like. Also included as acceptable water miscible solvents are ethylene glycol, dipropylene glycol, and the other lower molecular weight glycols, dimethyl formamide, the dioxanes, and tetrahydrofuran. Some of the solvents may also be charged with the amine if that is the form in which it is available. It is preferred that the bulk of the water be in the reaction vessel with the epihalohydrin, however. Reaction solids of less than 75% after all the initial polyamine charge has been added are required with between 40 and 65% solids preferred. Lower solids results in long crosslinking reactions while very high solids results in too rapid a reaction and difficulties in heat transfer.

Addition of the polyamine should be carried out in less than about 150 minutes and the temperature should not be allowed to rise above 60°C. for any significant period of time until after enough amine has been added to effectively react, through an alkylation reaction, with all the epihalohydrin present. This method insures that reaction of the epihalohydrin is essentially quantitative with the amine, and not to epihalohydrin byproducts. It is preferred that the temperature does not rise above 45°C. for any period during this time and that the time of addition for at least about 90% of the polyamine is less than about 120 minutes. Having accomplished this it is then possible to further add amine to reduce the epihalohydrin amine ratio to the desired level. The additional amine addition can be at higher temperatures during the crosslinking step.

A subsequent crosslinking step is then used to build to the desired viscosity. Temperatures during this stage can vary depending on the boiling characteristics of the solvent. The temperature, and thus the rate, of crosslinking will depend on the reaction solids, the method of polyamine addition, and the epihalohydrin/amine ratio. With the preferred solvent, water, and using the preferred ratio to give 50-80% conversion to tertiary amine, the preferred crosslinking temperature will be between about 50° and about

85°C, and the most prefered temperature is from about 60 to about 75°C. Addition of additional water during crosslinking is common to control the crosslinking rate as is variation of the temperature. Addition of additional polyamine to provide crosslinking sites will accelerate the crosslinking at this point. Similarly, addition of alkali, in the form of mineral alkalies such as NaOH, $NaCO_3$, or KOH, or amine alkalies such as ammonium hydroxide, will also accelerate the reaction.

Upon reaching the desired terminal viscosity the reaction can be stopped either by addition of large amounts of solvent or by addition of an acid to lower the pH below about 5.0. Combinations of the two approaches can also be used. The product should then be cooled as rapidly as possible to avoid product degradation.

Acids that can be employed would include the common mineral acids such as sulfuric acid, hydrochloric acid, hydrobromic acid, hydrofluoric acid, phosphoric acid, nitric acid, and the like. Simple organic acids such as formic acid or acetic acid can also be used, as can mixtures of the mentioned acids.

In the application of these resins as size stabilizers the common dispersible hydrophobic sizing agents can be used. The advantage gained over the materials already common to the art, is that the final product contains substantially lower levels of 1,3- DCP and is thus significantly safer to use.

Included would be the reactive sizing agents such as alkylketene dimer and the like. The alkylketene dimers would include the common types, such as those rich in stearic acid, palmitic acid, and behenic acid; those made with mixtures of fatty acids, and those made with phenyl groups terminating the alkyl chain. Among the other reactive sizes that could be dispersed would be acid anhydrides and organic isocyanates. In the application of these resins as size stabilizers, the resin is employed as about 15 to about 200% of the solid fraction of the dispersion. Examples of cationic size dispersions of the type using resins similar to these can be found in U.S. patents 4,407,994, 4,478,682, and the like, all of which are incorporated herein in their entirety by reference.

Included among the non-reactive sizing materials that can be stabilized by these resins are the typical rosins derived from tall oil, the gum process, or the wood extraction process; fortified rosins prepared by reaction of the common rosins with acidic compounds with the functionality

C=C-C=O

including fumaric acid, maleic anhydride, maleic acid, itaconic acid, acrylic acid, and the like and their applicable anhydrides. Besides rosin, other terpene and hydrocarbon resins with Ring and Ball softening points between 45° and 150°C. can be used. Non-reactive materials, such as wax and bituminous products can be mixed in to form a portion of the dispersed phase. In the application of these resins as size stabilizers, the resin is employed as about 4 to about 30% of the solid fraction of the dispersion. U.S. patents 3,941,736, 3,966,654, 4017,431, and 4,109,053, all of which are incorporated herein in their entirety by reference, describe such materials in detail.

In the formation of the cationic size dispersions of this invention other stabilizers can be used in combination with the resins described within. Such materials would include other cationic resins, such as those described in the patents of the last paragraph that are substantially free of epihalohydrin by-products. Also employed might be cationic starch of various types, low levels of anionic starch, cationic di- and trivalent materials such as alum, and various low molecular weight surfactants and dispersants. For the purposes of this invention the dispersions of interest would be those that obtain the substantial part of their stability by the resins described herein.

In the formation of the cationic size dispersions of the invention various methods can be used. These would include melting the solid material and dispersing it in an aqueous phase, with the resin, followed by homogenization and cooling. Another method might involve admixture of the resin with a previously formed stable dispersion that does not have any significant level of dihalopropanols. A third method would involve dissolving the solid material in a solvent followed by forming a premix including the resin, homogenization followed by solvent stripping, and subsequent cooling of the dispersion. Further post addition of the resin or other materials that do not contain dihalopropanols at significant levels to yield a size with improved properties can be practiced.

This invention includes a class of polymers made by reacting an epihalohydrin with a polyalkylene polyamine, the final product containing significantly reduced levels of epihalohydrin by-products, especially 1,3- dichloropropanol (DCP), and the process by which they are derived. Preferred examples include polymers based on epichlorohydrin reacted with either BHMT or HMDA and containing less than 0.5% 1,3 DCP at resin solids above 35%.

A further aspect of the invention is the size dispersions that require this type of resin for stabilization and size performance. Incorporation of the resins described herein results in finished size dispersions that

contain less than 0.1% 1,3 DCP at dispersion solids typical of commercial practice; 25% or greater for cationic rosin size dispersions and 10% or greater for cationic reactive size dispersions.

The invention is further illustrated by the following examples which demonstrate the best known embodiments of the invention. It is to be distinctly understood that these examples are presented for illustrative purposes only and are not intended to be limiting.

Example 1

To a reaction flask, equipped with an agitator and condenser, were added 192.5 parts of epichlorohydrin and 207.5 parts of water. To the agitated mixture was added 146.8 parts of a 70% aqueous solution of hexamethylenediamine (HMDA) (2.35 moles epi/mole HMDA) so that the temperature did not exceed 35°C. during the addition. The time for addition of the HMDA solution was 30 minutes. Upon completion of the HMDA addition the reaction flask was brought to 80°C. Reaction progress was monitored using Gardner-Holdt ("G-H") bubble tubes. At a "G-H" of R, 95.1 parts of water was added to help control the crosslinking rate. The reaction mixture was then taken to "G-H" P, at which point 135.0 parts water and 7.67 parts concentrated $H_2SO_4$ were added (pH 2.75) to stabilize the resin. The resin was cooled to room temperature and stored. The resin had a total solids of 39.5% and a Brookfield viscosity of 142.5 cps (LVT viscometer, No. 2 spindle, 60 rpm, room temperature). G.l.c. analysis of epichlorohydrin by-products was <10 ppm epi, 639 ppm 1,3-DCP, <10 ppm 2,3-DCP, and 85 ppm 2,3- chloropropanediol (CPD).

Example 2

To a reaction flask, equipped with an agitator and condenser, were added 192.5 parts of epichlorohydrin and 207.5 parts of water. To the agitated mixture was added 146.8 parts of a 70% aqueous solution of hexamethylenediamine (HMDA) (2.35 moles epi/mole HMDA) so that the temperature did not exceed 45°C. during the addition. The time for addition of the HMDA solution was 27 minutes. Upon completion of the HMDA addition the reaction flask was brought to 80°C. Reaction progress was monitored using Gardner-Holdt ("G-H") bubble tubes. At a "G-H" of R, 95.1 parts of water was added to help control the crosslinking rate. The reaction mixture was then taken to "G-H" N, at which point 135.1 parts water and 7.85 parts concentrated $H_2SO_4$ were added (pH 2.75) to stabilize the resin. The resin was cooled to room temperature and stored. The resin had a total solids of 39.0% and a Brookfield viscosity of 130 cps (LVT viscometer, No. 2 spindle, 60 rpm, room temperature). Analysis of epichlorohydrin by-products was <10 ppm epi, 824 ppm 1,3 DCP, <10 ppm 2,3-DCP, and 109 ppm 2,3- chloropropanediol (CPD).

Example 3

To a reaction flask, equipped with an agitator and condenser, were added 164.4 parts of epichlorohydrin and 80.0 parts of water. To the agitated mixture was added 290.7 parts of a commercially available (7.61% amine nitrogen content) 52.8% aqueous solution of bis-hexamethylenetriamine (BHMT) (3.83 moles epi/mole BHMT) so that the temperature did not exceed 53°C. during the addition. The time for addition of the BHMT solution was 43 minutes. Upon completion of the BHMT addition the reaction flask was brought to 70°C. Reaction progress was monitored using Gardner-Holdt ("G-H") bubble tubes. At a "G-H" of A+, 35.1 parts of BHMT solution was added to accelerate the reaction. At "G-H" E, 17.4 parts of BHMT solution was again added. At "G-H" R, 95.0 parts of water was added to help control the crosslinking rate. At "G-H" K, the remaining 10.1 parts of BHMT solution was added to reach a final mole ratio target of 3.0. The reaction mixture was then taken to "G-H" R+, at which point 166.9 parts water and 15.1 parts concentrated $H_2SO_4$ were added (pH 2.30) to stabilize the resin. The resin was cooled to room temperature and stored. The resin had a total solids of 37.1% and a Brookfield viscosity of 230 cps (LVT viscometer, No. 2 spindle, 60 rpm, room temperature). Analysis of epichlorohydrin by-products was <100 ppm epi, 2,700 ppm 1,3-DCP, <100 ppm 2,3-DCP, and 200 ppm 2,3-chloropropanediol (CPD). For this particular example a lower addition temperature would have yielded even lower levels of DCP.

Example 4

To a large reaction vessel, equipped with an agitator and condenser, were added 3933 parts of epichlorohydrin and 4216 parts of water. To the agitated mixture was added 3080 parts of a 69.1% aqueous solution of hexamethylenediamine (HMDA) (2.32 moles epi/mole HMDA) so that the temperature did not exceed 53°C. during the addition. The time for addition of the HMDA solution was 80 minutes. Upon

completion of the HMDA addition the reaction flask was brought to 75° C. Reaction progress was monitored using Gardner-Holdt ("G-H") bubble tubes. At a "G-H" of P, 1944 parts of water were added to help control the crosslinking rate. The reaction mixture was then taken to "G-H" N, at which point 2747 parts water and 220 parts concentrated $H_2SO_4$ were added (pH 2.70) to stabilize the resin. The resin was cooled to room temperature and stored. The resin had a total solids of 38.8% and a Brookfield viscosity of 177 cps (LVT viscometer, No. 2 spindle, 60 rpm, room temperature). Analysis of epichlorohydrin by-products was <10 ppm epi, 1,522 ppm 1,3-DCP, <10 ppm 2,3-DCP, and 265 ppm 2,3- chloropropanediol (CPD).

Example 5

In this example, a resin was made without consideration of the temperature during polyamine addition as described in U.S. patent 3,655,506. To a reaction flask, equipped with an agitator and condenser, were added 192.5 parts of epichlorohydrin and 207.5 parts of water. To the agitated mixture was added 146.8 parts of a 70% aqueous solution of hexamethylenediamine (HMDA) (2.35 moles epi/mole HMDA) so that the temperature rises to 74° C. maximum and was maintained near 70° C. during the addition. The time for addition of the HMDA solution was 35 minutes. Upon completion of the HMDA addition the reaction flask was brought to 80° C. Reaction progress was monitored using Gardner-Holdt ("G-H") bubble tubes. At a "G-H" of Q-, 95.1 parts of water was added to help control the crosslinking rate. The reaction mixture was then taken to "G-H" L, at which point 135.1 parts water and 14.85 parts concentrated $H_2SO_4$ were added (pH 2.75) to stabilize the resin. The resin was cooled to room temperature and stored. The resin had a total solids of 38.0% and a Brookfield viscosity of 190 cps (LVT viscometer, No. 2 spindle, 60 rpm, room temperature). Analysis of epichlorohydrin by-products was <100 ppm epi, 18,100 ppm 1,3-DCP, 100 ppm 2,3-DCP, and 900 ppm 2,3-chloropropanediol (CPD).

Example 6

To a reaction flask, equipped with an agitator and condenser, were added 192.5 parts of epichlorohydrin and 207.5 parts of water. To the agitated mixture was added 146.8 parts of a 70% aqueous solution of hexamethylenediamine (HMDA). (2.35 moles epi/mole HMDA) The HMDA solution was added rapidly so that the temperature averaged about 50° C. but with a rise to 75° C. during the addition. The time for addition of the HMDA solution was 30 minutes. Upon completion of the HMDA addition the reaction flask was brought to 80° C. Reaction progress was monitored using Gardner-Holdt ("G-H") bubble tubes. At a "G-H" of R, 95.1 parts of water was added to help control the crosslinking rate. The reaction mixture was then taken to "G-H" M, at which point 135.1 parts water and 7.60 parts concentrated $H_2SO_4$ were added (pH 2.75) to stabilize the resin. The resin was cooled to room temperature and stored. The resin had a total solids of 38.8% and a Brookfield viscosity of 127.5 cps (LVT viscometer, No. 2 spindle, 60 rpm, room temperature). Analysis of epichlorohydrin by-products was <100 ppm epi, 3,500 ppm 1,3-DCP, <100 ppm 2,3-DCP, and <100 ppm 2,3- chloropropanediol (CPD).

Example 7

Table I compares the addition temperature and time of addition of the polyamine with the g.l.c. analysis for epichlorohydrin by-products for the resins in Examples 1-6.

Table I

| Comparing Amine Addition Temperature and DCP | | | |
|---|---|---|---|
| Resin Example | Maximum Temperature During Amine Addition (° C.) | Time for Polyamine Addition (min.) | DCP (ppm) |
| 1 | 35 | 30 | 639 |
| 2 | 45 | 27 | 824 |
| 3 | 53 | 43 | 2700 |
| 4 | 53 | 80 | 1522 |
| 5 | 74 | 35 | 18100 |
| 6 | 75 | 30 | 3500 |
| 23 | 41 | 302 | 12600 |
| 24 | 41 | 144 | 3950 |

Example 8

A resin was made using an excess of epichlorohydrin as described in U.S. patent 3,655,506 and as commonly practiced commercially, but at a reduced temperature according to the invention. To a reaction flask, equipped with an agitator and condenser, were added 486.0 parts of epichlorohydrin and 301.6 parts of water. To the agitated mixture was added 567.6 parts of a commercially available 52.8% aqueous solution (7.61% amine nitrogen content) of bis-hexamethylenetriamine (BHMT) (5.1 moles epi/mole BHMT) so that the temperature did not exceed 49° C. during the addition. The time for addition of the BHMT solution was 30 minutes. Upon completion of the BHMT addition the reaction flask was brought to 80° C. Reaction progress was monitored using Gardner-Holdt ("G-H") bubble tubes. At a "G-H" of A-, 60 parts of BHMT solution was added to accelerate the reaction. At "G-H" A+, 20 parts of BHMT solution was again added. Addition of 10 parts BHMT solution was then made at "G-H" C and H, respectively, to further accelerate the reaction. This results in a final mole ratio of 4.33. At "G-H" T+, 240 parts of water was added to help control the crosslinking rate. The reaction mixture was then taken to "G-H" K, at which point 464.4 parts water and 20.8 parts concentrated $H_2SO_4$ were added (pH 2.20) to stabilize the resin. The resin was cooled to room temperature and stored. The resin had a total solids of 39.5% and a Brookfield viscosity of 160 cps (LVT viscometer, No. 2 spindle, 60 rpm, room temperature). Analysis of epichlorohydrin by-products was <100 ppm epi, 28,200 ppm 1,3-DCP, 200 ppm 2,3-DCP, and 2,800 ppm 2,3-chloropropanediol (CPD).

Example 9

In a manner similar to Example 8, to a reaction flask, equipped with an agitator and condenser, were added 167.9 parts of epichlorohydrin and 99.2 parts of water. To the agitated mixture was added 250 parts of a commercially available (7.61% amine nitrogen content) 52.8% aqueous solution of bis-hexamethylenetriamine (BHMT) (5.1 moles epi/mole BHMT) so that the temperature did not exceed 46° C. during the addition. The time for addition of the BHMT solution was 33 minutes. Upon completion of the BHMT addition the reaction flask was brought to 80° C. Reaction progress was monitored using Gardner-Holdt ("G-H") bubble tubes. At a "G-H" of A-, 24.2 parts of BHMT solution was added to accelerate the reaction. At "G-H" A, 15.0 parts of BHMT solution was again added. At "G-H" J+, 15.0 parts of BHMT solution was added, yielding a final epi/BHMT mole ratio of 4.0. At "G-H" T+, 99.2 parts of water was added to help control the crosslinking rate. The reaction mixture was then taken to "G-H" N at which point 166.9 parts water and 9.68 parts concentrated $H_2SO_4$ were added (pH 2.30) to stabilize the resin. The resin was cooled to room temperature and stored. The resin had a total solids of 36.0% and a Brookfield viscosity of 127 cps (LVT viscometer, No. 2 spindle, 60 rpm, room temperature). Analysis of epichlorohydrin by-products was <100 ppm epi, 19,300 ppm 1,3-DCP, <100 ppm 2,3-DCP, and 900 ppm 2,3-chloropropanediol (CPD).

Example 10

To determine the efficacy of this class of resins for promoting the internal sizing of a reactive size, the

materials were tested on a laboratory continuous former. Paper was made using a 70:30 blend of Weyerhauser bleached hardwood kraft pulp and Rayonier bleached softwood kraft pulp refined using a Jones® 12" double disc refiner to 425 cc. Canadian standard freeness (CSF) in demineralized water. The pulp slurry was formed into a 40 lb/ream (500 sheets of 24" x 36") sheet using a continuous forming process. The sheet was wet pressed and drum dried on the machine in a conventional manner. The drying process used 7 drums, oil heated from 150° to 190°F, to give 3.9-4.3% moisture in the sheet. All stock contained 15% Klondyke® Water Washed filler clay added to the machine chest. Stalok® 400 cationic starch was cooked and added to the thick stock at 0.75%, a reactive sizing agent at 0.15% was added to the thick stock just after the starch, and Reten® 1523P high molecular weight anionic retention was added at 0.0125% to thin stock at the fan pump. Dilute NaOH was added to the thick stock prior to starch addition to control the headbox pH between 7.6 and 8.2. All additives were added in a dilute form. Resins, from the examples, were added at 0.225% in-line to the dilute reactive size solution just before addition to the pulp slurry. All additions were based on total furnish solids except the clay which is based on fiber. Klondyke clay is available from Englehard, Stalok 400 from A. E. Staley, Inc., and Reten is available from Hercules, Inc. The reactive size is an alkylketene dimer based dispersion of the type described in Example 1 of U.S. patent No. 3,130,118 which is incorporated herein in its entirety by reference. This type of dispersion is of the non-promoted class.

The papermaking system described in this example simulates a fine paper process that requires size promotion to affect sizing just off the paper machine. The important distinction is the lack of soluble alkalinity to enhance the rate of size development for the reactive size. In this type of system, common to a segment of the paper industry, the non-promoted reactive size will not alone provide sizing just off the machine. Sizing does develop after aging or with heat treatment.

Table II compares the performance of the resins described in Examples 2, 3, and 9 on size promotion. Sizing was measured with the Hercules Size Tester® (HST) using No. 2 test ink to 80% reflectance. Aged samples were conditioned 7 days at 70°F. and 50% relative humidity before testing. Off-machine samples were tested at ambient conditions within 10 minutes of coming off the paper machine.

Table II

| Comparing Size Promotion | | | |
|---|---|---|---|
| Resin Example | DCP (ppm) | Hercules Size Test (sec.) | |
| | | Off-Machine | Naturally Aged |
| 2 | 824 | 140 | 760 |
| 3 | 2700 | 136 | 762 |
| 9 | 19300 | 189 | 912 |
| Reactive Size | (Control) | 0 | 580 |

Example 11

The wet strengthening effectiveness of the resins described in examples 2, 3. and 9 were compared using handsheets. Handsheets were prepared using a 50:50 blend of Weyerhauser bleached hardwood kraft pulp and Rayonier bleached softwood kraft pulp beaten in a Noble and Wood® cycle beater to 500 cc. Canadian standard freeness (CSF) in a standard water containing 100 ppm hardness as $CaCO_3$ and 50 ppm alkalinity as $CaCO_3$. The pulp slurry was diluted to 0.27% in an agitated proportioner to which the resin at 0.5% was added. Aliquots of this slurry were then taken and formed into 8" x 8" handsheets of 40 lb/ream basis weight, using a deckle concentration of about 0.025% in a Noble and Wood® handsheet apparatus. All dilution water had been adjusted to pH 7.5 with $H_2SO_4$. A closed water system was employed with the first 5 sheets discarded to approach steady state. Formed sheets were pressed to 33% solids and dried on a steam heated drum dryer set at 240°F. The sheets were tested for wet and dry tensile using a Thwing-Albert® tensile tester on strips cut to 1/2" and using a 6" span with an elongation rate of 2-3"/minute. Samples were tested either after curing in an oven for 30 minutes at 80°C. or after naturally aging for 14 days at 70°F. and 50% relative humidity. The results are summarized in Table III. Results are reported as the ratio of wet to dry tensile. Paper containing no resin had a wet/dry tensile of 3.1 and 4.1% for cured and naturally aged paper, respectively.

Table III

| Effect of Resins on Wet Strength of Paper | | | |
|---|---|---|---|
| Resin Example | DCP (ppm) | Wet/Dry Tensile (%) | |
| | | Cured | Naturally Aged |
| 2 | 824 | 13.9 | 12.5 |
| 3 | 2700 | 14.6 | 12.8 |
| 9 | 19300 | 14.7 | 13.0 |

The following examples demonstrate the use of these resins as size dispersion stabilizers. The size dispersions are of the cationic type and are found in, for instance, U.S. patent 3,966,654 for rosin and fortified rosin, and U.S. patent 3,483,077 and related patents for alkylketene dimer. The advantage herein described, is that of the significant reduction of dihalopropanols and other epihalohydrin by-products; thus providing for a substantially safer handling and environmentally compatible materials.

Example 12

This example illustrates the preparation of fortified rosin. Fumaric acid, 6.5 parts, was added to formaldehyde treated tall oil rosin at a temperature of 205 ° C. The fumaric acid dissolved in the fused tall oil rosin and reacted therewith to provide fumaric acid fortified tall oil rosin. After substantially all the fumaric acid had reacted with the tall oil rosin, the fortified rosin was cooled to room temperature. The resulting fortified rosin contains about 6.5% combined fumaric acid.

Example 13

A solution was prepared by dissolving 325 parts of fortified rosin, prepared as described in Example 12, into 217 parts of methylene chloride. This solution was thoroughly mixed with 76.2 parts of the resin prepared in Example 3 (37.1% solids). The resin solution of Example 3 was diluted with 608.2 parts of water and adjusted to pH 4.2 with dilute NaOH prior to this. This premix was blended together for 3 minutes and then homogenized twice at 3000 p.s.i.g. using a laboratory Manton-Gaulin® homogenizer. The stable emulsion was then stripped of methylene chloride by distillation from an agitated vessel at atmospheric pressure. The resulting stable dispersion analyzed at 32.7% solids, with a Brookfield viscosity of 35 cps, pH of 2.9, and a mean particle size of 0.62 microns as analyzed by a NiComp® Model HN 5-90 particle size analyzer. The product contained 0.2 ml breakout when a 20% solution was centrifuged for 30 minutes at 1900 rpm using a Damon/IEC® model IEC HN-SII laboratory centrifuge.

Example 14

To 400 parts of the dispersion from Example 13 was blended 29.3 parts of a 50% solids aluminum sulfate solution (alum). The product analyzed at 32.3% solids and pH 2.3. Both dispersions (from Examples 13 and 14) are useful for paper sizing over the pH range of 4.0 to about 7.2 when employed with additional alum in the papermaking process.

Example 15

A solution was prepared by dissolving 325 parts of fortified rosin, prepared as described in Example 12, into 217 parts of methylene chloride. This solution was thoroughly mixed with 72.9 parts of the resin prepared in Example 4 (38.8% solids). The resin solution of Example 4 was diluted with 611.5 parts of water and adjusted to pH 4.2 with dilute NaOH prior to this. This premix was then blended together for 3 minutes and then homogenized twice at 3000 p.s.i.g. using a laboratory Manton-Gaulin® homogenizer. The stable emulsion was then stripped of methylene chloride by distillation from an agitated vessel at atmospheric pressure. The resulting stable dispersion analyzed at 33.0% solids, with a Brookfield viscosity of 13 cps, pH of 3.4, and a mean particle size of 0.51 microns as analyzed by a NiComp® Model HN 5-90 particle size analyzer. The product contained 0.2 ml breakout when a 20% solution was centrifuged for 30 minutes at 1900 rpm using a Damon/IEC® model IEC HN-SII laboratory centrifuge.

Example 16

To 400 parts of the dispersion from Example 15 was blended 29.3 parts of a 50% solids aluminum sulfate solution (alum). The product analyzed at 33.3% solids and pH 2.7. Both dispersions (from Examples 15 and 16) are useful for paper sizing over the pH range of 4.0 to about 7.2 when employed with additional alum in the papermaking process.

Example 17

Example 15 was repeated except that the resin used was similar to that made in Example 9 but was obtained from another source. Aluminum sulfate was added to the dispersion as in Example 16. This example is representative of the type of cationic rosin size dispersions described in U.S. Patent No. 3,966,654.

Example 18

Paper sizes prepared as described in Examples 14, 16, and 17 were evaluated using the papermaking apparatus described in Example 10 to prepare 40 lb/ream sheets. The pulp was beaten in a standard water as described in Example 11. All stock contained 12% Klondyke® Water Washed filler clay added to the machine chest, alum at 0.75% added to the thick stock just after the starch, and Reten® 1232 high molecular weight cationic retention added at 0.025% to thin stock at the fan pump. The headbox pH was 5.0 and the stock temperature 110°F. All additives were added in a dilute form. Dispersed rosin size, from the examples above, was added at 0.375% to the thick stock just after the alum addition point. All additions were based on total furnish solids except the clay which is based on fiber. Sizing was evaluated by HST as described previously. Table IV summarizes the results.

Table IV

| Performance in a Rosin Size Dispersion | |
|---|---|
| Size Example | HST(*) (sec) |
| 13 | 93 |
| 16 | 84 |
| 17 | 83 |

(*)naturally aged 1 week

Example 19

A premix was prepared by cooking 21.8 part of a cationic waxy maize starch with 4 parts Lignosol® XD sodium ligninsulfonate dispersant in 700 parts of water. The pH was adjusted with 0.5 parts $H_2SO_4$ and water was added back to the starch solution to restore the mixture to the original weight, cooling the mixture to 70°C. To the cooked starch were added in sequence, 105.9 parts of an alkylketene dimer flake made from a blend of palmitic and stearic acids as described in U.S. Patent 3,130,118, 62.1 parts of resin solution from Example 4 (38.8% total solids), and 0.5 parts biocide. The premix was heated to 65° C to melt the dimer and then homogenized once at 3000 p.s.i.g. The product was treated with 3 parts of a 20% solution of papermakers alum and 105.2 parts water to bring the dispersion to approximately 15.5% solids. The product analyzed at 15.5% total solids, had a Brookfield viscosity of 11 cps, was stable for more than 4 weeks, and had a 1,3 DCP content of 80 ppm by g.l.c.

Example 20

As an example of a non-promoted reactive size dispersion, the size dispersion of Example 19 is essentially duplicated without use of the cationic resin. In this case, the cationic starch serves the function of dispersion stabilizer.

Example 21

As an alternative method of preparation, 17.0 parts of the resin from Example 4 (38.8% total solids) is blended with 70.0 parts of the dispersion of Example 20 and 13.0 parts of water. The combination makes a size particularly suitable for developing sizing just off the paper machine in hard to size systems. Analysis of epichlorohydrin by-products was <10 ppm epi, 244 ppm 1,3-DCP, <10 ppm 2,3-DCP, and 31 ppm 2,3-chloropropanediol (CPD). A similar commercially available product made with a conventional epichlorohydrin/polyalkylene polyamine resin was analyzed to have of <10 ppm epi, 6268 ppm 1,3-DCP, 39 ppm 2,3-DCP, and 245 ppm 2,3- chloropropanediol (CPD).

Example 22

Paper sizes prepared as described in Examples 19, 20, and 21 were evaluated using the papermaking apparatus described in Example 10 to prepare 40 lb/ream sheets. Pulp was beaten in a standard water as described in Example 11. Albacar® HO, a precipitated calcium carbonate (PCC) paper filler, was added at 15% to the pulp slurry in the machine chest. Stalok® 400 cationic starch was cooked and added to the thick stock at 0.75% and Reten® 1523P high molecular weight retention added at 0.025% to thin stock at the fan pump. The headbox pH was between 7.6 and 8.2. All additives were added in a dilute form. Size was added after the starch to the thick stock at 0.1% based on dimer assay. All additions were based on total furnish solids, except the PCC which was based on fiber. The dispersion from Example 20 represents a typical non-promoted alkylketene dimer dispersion for comparison. Sizing was evaluated by HST as described previously. Table V summarizes the results.

Table V

| Performance in a Reactive Size Dispersion | |
|---|---|
| Size Example | HST(*) (sec) |
| 19 | 86 |
| 21 | 146 |
| 20 | 100 |

(*)off-machine

The papermaking system described in this example simulates a fine paper process that does not require size promotion to affect sizing just off the paper machine. The important distinction is the presence of soluble alkalinity to enhance the rate of size development for the reactive size. In this type of system, common to a segment of the paper industry, a non-promoted reactive size alone will provide sizing just off the machine. Further sizing does develop after aging or with heat treatment.

Example 23

Using commercial scale equipment the process and formulation of Example 2 was repeated except that the time for addition of the HMDA solution was 302 minutes and the maximum temperature during the addition was 41.0 ° C. The resin had a total solids of 38.2%, a Brookfield viscosity of 248 cps, and a pH of 2.61. Analysis for 1,3 DCP was 12,600.

Example 24

Using the same commercial scale equipment the process and formulation used for Example 23 was repeated except that the time for addition of the HMDA solution was 144 minutes and the maximum temperature during the addition was 41.4 ° C. The resin had a total solids of 38.7%, a Brookfield viscosity of 197 cps, and a pH of 3.19. Analysis for 1,3 DCP was 3,950 ppm.

**Claims**

1. A process for making a condensation product of an epihalohydrin and a polyalkylamine polyamine with a reduced level of epihalohydrin byproducts in situ, comprising reacting an epihalohydrin having the formula:

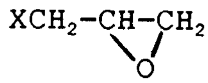

wherein
X = Cl or Br,
with a polyalkylamine polyamine wherein the amount of epihalohydrin is no more than that required to fully alkylate all the amine sites of said polyalkylene polyamine to a tertiary amine, said polyalkylene polyamine is added to a solution of said epihalohydrin in a solvent, wherein the solvent is water or a water-miscible solvent, and wherein said polyalkylene polyamine is selected from the group consisting of polyalkylene polyamines having the formula

$(NH_2\text{-}CHZ\text{-}(CH_2)_n\text{-}NHR\text{-})_x$

wherein:
n = 1-7,
x = 1-6,
Z = H or $CH_3$,
R = H or $CH_2Y$, and
Y = $CH_2Z$, H, $NH_2$, or $CH_3$,
polyalkylene polyamines having the formula:

$(NH_2\text{-}CH_2\text{-}(CHZ)_m\text{-}(CH_2)_n\text{-}NHR\text{-})x$

wherein:
m = 1-6, n = 1-6, and m + n = 2-7,
x = 1-6,
Z = H or $CH_3$,
R = H or $CH_2Y$, and
Y = $CH_2Z$, H, $NH_2$, or $CH_3$,
and mixtures thereof, at a temperature which does not exceed about 60 ° C. whereby the level of epihalohydrin byproducts is reduced.

**2.** A process as defined in Claim 1, wherein said temperature is between about 25 ° C. and about 60 ° C.

**3.** A process as defined in Claim 2, wherein said temperature is between about 30 ° C. and about 45 ° C.

**4.** A process as defined in Claim 1, wherein said solvent is water.

**5.** A process as defined in Claim 1, further comprising crosslinking the resulting condensation product to form a resin.

**6.** A process as defined in Claim 5, wherein said condensation product is crosslinked at an elevated temperature.

**7.** A process as defined in Claim 6, wherein said condensation product is crosslinked at a temperature of from about 50 ° C. to about 85 ° C.

**8.** A process as defined in Claim 6, wherein said condensation product is crosslinked at a temperature of from about 60 ° C. to about 75 ° C.

**9.** A process as defined in Claim 5, further comprising stabilizing the resin against further crosslinking by adding an acid, diluting with water, or both.

**10.** A process as defined in Claim 9, wherein said resin is stabilized against further crosslinking by adding an acid to a pH of 5.0 or less.

**11.** A process as defined in Claim 10, wherein said acid is a mineral acid, acetic acid, formic acid, or combinations thereof.

**12.** A process as defined in Claim 1, wherein the epihalohydrin is used in an amount to alkylate between about 50% and about 100% of the available amine nitrogen sites of said polyalkylene polyamine to tertiary amines.

**13.** A process as defined in Claim 1, wherein said epihalohydrin byproducts are, 1,3-dichloropropanol, 2,3-dichloropropanol, 2,3-chloropropanediol, and mixtures thereof.

**14.** A process as defined in Claim 1, wherein the level of epihalohydrin byproducts is reduced to less than about 4500 ppm.

**15.** A process as defined in Claim 1, wherein said epihalohydrin is epichlorohydrin.

**16.** A process as defined in Claim 1, wherein said polyalkylene polyamine is 1,6-hexanediamine.

**17.** A process as defined in Claim 1, wherein said polyalkylene polyamine is bis-hexamethylenetriamine.

**18.** A process as defined in Claim 1, wherein said polyalkylene polyamine is 2-methyl-1,5-pentanediamine.

**19.** A product produced by the process of Claim 1.

**20.** A resin produced by the process of Claim 5.

**21.** A composition for sizing paper comprising the resin of Claim 20 in an amount such that the 1,3-dichloropropanol content of the dispersion is less than 0.1% at solids above 15%.

**22.** A composition as defined in Claim 21, comprising an aqueous cationic dispersion of a fortified rosin size stabilized with from about 4 to about 30% of said resin as its solid fraction.

**23.** A composition as defined in Claim 22, wherein said sizing agent is fortified with fumaric acid.

**24.** A composition as defined in Claim 22, wherein said resin is the condensation product of an epihalohydrin and 1,6-hexanediamine.

**25.** A composition as defined in Claim 22, wherein said resin is the condensation product of an epihalohydrin and bis-hexamethylenetriamine.

**26.** A composition as defined in Claim 22, wherein said resin is the condensation product of an epihalohydrin and 2-methyl-1,5 pentanediamine.

**27.** A composition as defined in Claim 21, comprising an aqueous cationic dispersion of an alkylketene dimer with about 15 to about 200% of said resin as its solid fraction.

**28.** A composition as defined in Claim 27, wherein said resin is the condensation product of an epihalohydrin and 1,6-hexanediamine.

**29.** A composition as defined in Claim 27, wherein said resin is the condensation product of an epihalohydrin and bis-hexamethylenetriamine.

**30.** A composition as defined in Claim 27, wherein said resin is the condensation product of an epihalohydrin and 2-methyl-1,5 pentanediamine.

**31.** A process as defined in claim 1, wherein at least about 90 percent by weight of said polyalkylene polyamine is added to the solution of epihalohydrin in less than about 150 minutes.

**32.** A process as defined in claim 5, wherein at least about 90 percent by weight of said polyalkylene

polyamine is added to the solution of epihalohydrin in less than about 120 minutes.

**33.** A process as defined in claim 9, wherein at least about 90 percent by weight of said polyalkylene polyamine is added to the solution of epihalohydrin in less than about 100 minutes.

**34.** A process as defined in claim 1, wherein during addition of about the first 90% of the polyalkylene polyamine the temperature does not exceed about 60 ° C.

**35.** A product produced by the process of claim 31.

**36.** A resin produced by the process of claim 32.

**37.** A product produced by the process of claim 34.

European Patent Office

# EUROPEAN SEARCH REPORT

Application Number

EP 92 10 4993

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | FR-A-2 086 178 (FARBENFABRIKEN BAYER AKTIENGESELLSCHAFT)<br>* claims 1-4 * | 1-37 | C08G59/10<br>C08G73/02<br>D21H17/55<br>D21H17/56 |
| A | US-A-3 966 654 (ALDRICH P.H.)<br>* claims 1-21 * | 1-37 | |

TECHNICAL FIELDS SEARCHED (Int. Cl.5 )

C08G

The present search report has been drawn up for all claims

| Place of search | Date of completion of the search | Examiner |
|---|---|---|
| THE HAGUE | 01 JULY 1992 | GLANDDIER A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)